# EUROPEAN PATENT APPLICATION

(11) **EP 3 382 046 A1**
(43) Date of publication of application: **03.10.2018**
(21) Application number: 16886152.4
(22) Date of filing: 26.12.2016
(51) Int. Cl.: C22B 7/00, C22B 15/00, C22B 58/00, C01B 19/02, C25C 1/12

(54) **METHOD FOR RECYCLING COPPER INDIUM GALLIUM SELENIUM MATERIALS**

(30) Priority: 21.01.2016 CN 201610039560
(71) Applicant: Hanergy New Material Technology Co., Ltd., Yanqi Industrial Development Zone Huairou District Beijing 101407 (CN)
(72) Inventor: GAO, Yongtao, Beijing 100107 (CN); LIU, Junfei, Beijing 100107 (CN); WANG, Guan, Beijing 100107 (CN); WU, Guofa, Beijing 100107 (CN)
(74) Representative: Cabinet Beau de Loménie
(86) International application number: PCT/CN2016/112152
(87) International publication number: WO 2017/124893

(57) **Abstract**

A method for recycling copper indium gallium selenium materials comprises the steps of leaching by using sulfuric acid and hydrogen peroxide, reduction of selenium by using sulfur dioxide, separation of copper by using hydrolysis, alkali separation of indium and gallium, replacement of indium, hydrolysis of gallium, and the like. Leaching is carried out by using sulfuric acid in cooperation with hydrogen peroxide, so that the leaching rate is greatly improved, and acid gas pollution is reduced; pH differential copper is separated by using metal ion hydrolysis, so that costs are low; and in addition, alkali separation of gallium is carried out, separation between indium and gallium can be implemented by merely adjusting the pH of a solution, the separation effect is good, the purities of obtained indium and gallium products are high.

## Description

### Technical Field

The present invention relates to a method for recovering copper indium gallium selenide photovoltaic components, in particular to a method for recovering copper indium gallium selenide materials.

### Background Art

Copper indium gallium selenide thin-film solar cells are favored by the market due to their many advantages. Especially in recent years, they have been the most interest in R&D, scaled production and application of thin-film solar cells. The absorption layer of copper indium gallium selenide solar cells has a chalcopyrite structure composed of four elements, i.e. copper, indium, gallium and selenium, in an optimum ratio. The absorbable spectrum has a broad wavelength range. In addition to the visible spectrum which can be absorbed by amorphous silicon solar cells, the spectrum can also cover the near-infrared region with a wavelength between 700 and 2000 nm, which means the longest duration in a day for power generation. The total power generation provided by copper indium gallium selenide thin-film solar cells per day is over 20% more than that provided by crystalline silicon solar cells of the same wattage level. Crystalline silicon cells are inherently characterized by light induced degradation: after a prolonged exposure to sunlight, their power generation performance will gradually diminish. In contrast, copper indium gallium selenide solar cells are free from light induced degradation and have high power generation stability. Crystal silicon solar cells have hot spots after power generation for a long period of time, resulting in reduced power generation and increased maintenance costs. In contrast, copper indium gallium selenide solar cells can adopt an internal connection structure, which can avoid the occurrence of this phenomenon and requires lower maintenance costs than crystalline silicon solar cells.

The methods for manufacturing copper indium gallium selenide thin-film solar cells include vacuum sputtering, distillation and non-vacuum coating. No matter which manufacturing method is used, some copper indium gallium selenide materials may be produced during the manufacturing process. These materials contain rare metals such as indium, gallium and selenium, in addition to heavy metal copper. To help the continued use of rare metals such as indium, gallium and selenium and heavy metal copper, they need to be separated and separately recovered to facilitate further recycling, to ensure the sustainable development of copper indium gallium selenide thin-film solar cell materials. In the prior art, the main methods for recovering copper indium gallium selenide materials are combined wet or pyrometallurgical refining methods such as acid dissolution, extraction, oxidative distillation, etc.

Chinese patent application publication No. CN102296178A discloses a method for recovering copper indium gallium selenide, and specifically discloses a method of dissolving metal powders containing copper indium gallium selenide by a mixture of hydrochloric acid and hydrogen peroxide. This method uses hydrazine to reduce selenium, uses metal indium to replace copper, and separates indium from gallium by a combination of a supported liquid membrane and a dispersed stripping solution.

Chinese patent application publication No. CN103184388A discloses a method for recovering copper indium gallium selenide. In the method, the copper indium gallium selenide thin-film solar panels are first crushed into pieces, which are then soaked in a soaking process with a mixed system of sulfuric acid and hydrogen peroxide under a specified temperature for a specified time to give the soaking solution. Indium, gallium and selenium elements are then recovered by processes such as extraction, reverse extraction, electrolysis, and the like.

U.S. Patent No. 5,779,877 discloses a method for recovering copper indium selenide solar cell materials. The method mainly includes crushing, leaching with nitric acid, separating copper, selenium and indium with dual-electrode electrolysis, obtaining a mixture of indium and zinc oxides by evaporation and decomposition, and separating copper and selenium by oxidative distillation.

In the above-mentioned prior art techniques, leaching with hydrochloric acid and hydrogen peroxide would consume a large amount of oxidants. In addition, hydrochloric acid is volatile. The leaching reaction is an exothermic reaction, resulting in volatilization of a large amount of hydrochloric acid and relatively serious pollution. At the same time, the extractant used for extracting indium leads to a phenomenon of co-extraction of gallium, which makes it difficult to separate indium from gallium, thereby reducing the recovery rate of gallium. On the other hand, the method of replacing copper with indium leads to very high production costs.

### Summary of Invention

To solve the above-mentioned defects in the prior art, the present invention aims to provide a method for recovering copper indium gallium selenide material which can reduce environmental pollution and has high indium recovery rate and lower production cost.

The method for recovering copper indium gallium selenide material according to the present invention uses sulfuric acid in combination with hydrogen peroxide for leaching, which greatly increases the leaching rate and reduces acid gas pollution. Due to the difference in the pH values of the hydrolysis of metal ions, copper can be firstly separated from the solution after reduction of selenium by finely adjusting the pH value. The operation is simple and the cost is relatively low. On the other hand, the present invention uses basic conditions for gallium separation. Separation of indium from gallium can be achieved by merely adjusting the pH of the solution. The separation effect is good, and the obtained indium and gallium products have relatively high purities.

The method for recovering copper indium gallium selenide material according to the present invention includes the following steps.

In step A, the copper indium gallium selenide material is placed in a ball mill for ball milling.

In step B, concentrated sulfuric acid is diluted. The ball milled alloy powders obtained in step A are mixed with the diluted concentrated sulfuric acid and heated up, followed by introducing hydrogen peroxide for leaching. After the leaching is completed, the residue is filtered out to give a pure leachate. The following reactions are involved:

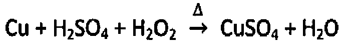

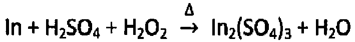

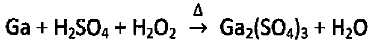

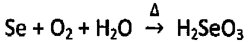

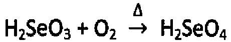

In step C, the leachate is heated up, followed by introducing sulfur dioxide gas. During the reduction of selenium, it can be observed that a brick red precipitate is formed in the container which gradually turns black, and black selenium is obtained after filtration. The following reaction is involved:

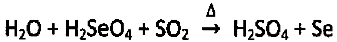

In step D, a sodium hydroxide solution is directly added to the solution after selenium removal to adjust the pH. The mixture is stirred at ambient temperature and then allowed to stand, followed by drawing the supernatant. Gallium hydroxide and indium hydroxide precipitates and a copper sulfate supernatant are obtained by direct filtration. The following reactions are involved:

6NaOH + In₂(SO₄)₃ → 3Na₂SO₄ + 2In(OH)₃

6NaOH + Ga₂(SO₄)₃ → 3Na₂SO₄ + 2Ga(OH)₃

In step E, the copper sulfate supernatant is directly evaporated and crystallized to give copper sulphate pentahydrate.

In step F, a sodium hydroxide solution is added to the gallium hydroxide and indium hydroxide precipitates. The mixture is heated while stirring at a constant temperature and then allowed to stand, followed by drawing the supernatant. Indium hydroxide precipitate and a sodium gallate solution are obtained by direct filtration. The following reaction is involved:

Ga(OH)₃ + OH⁻ → GaO₂⁻ + 2H₂O

In step G, the sodium gallate solution is directly hydrolyzed to give potassium hydroxide precipitate.

More specifically, a sulfuric acid solution may be added to adjust the pH to neutrality, followed by adding diluted polyacrylamide. The mixture is stirred at a constant temperature to allow flocculation and precipitation. After precipitation, the supernatant is drawn, and gallium hydroxide precipitate is obtained by direct filtration. The following reaction is involved:

GaO₂⁻ + H⁺ + H₂O → 2Ga(OH)₃

In step H, the indium hydroxide precipitate is reversely dissolved by hydrochloric acid, followed by heating up and stirring at a constant temperature. The mixture is replaced with a 4N zinc plate, followed by washing and filtering to give sponge indium. The following reactions are involved:

In(OH)₃ + 3HCl → InCl₃ + 3H₂O

3Zn + 2InCl₃ → 3ZnCl₂ + 2In

The method for recovering copper indium gallium selenide material according to the present invention further comprises in step A that the copper indium gallium selenide material is ball milled to powders of below 40 mesh, followed by drying at 100 °C for 4 hours.

The method for recovering copper indium gallium selenide material according to the present invention further comprises in step B that concentrated sulfuric acid is diluted to 25%; 200 g of dried material is mixed with 25% concentrated sulfuric acid at a solid-liquid ratio of 1:5 and heated to 90 °C, followed by introducing hydrogen peroxide at a rate of 8 ml/min at a stirring rate of 600 r/min and leaching at a constant temperature for 3 h.

The method for recovering copper indium gallium selenide material according to the present invention further comprises in step C that the leachate is heated to 65° C, followed by introducing sulfur dioxide gas at a rate of 10 L/min and maintaining the temperature for 10 hours.

The method for recovering copper indium gallium selenide material according to the present invention further comprises in step D that an 8 mol/L sodium hydroxide solution is directly added to the solution after selenium removal to adjust the pH to 4.5. The mixture is stirred at ambient temperature for 20 minutes at a stirring rate of 200 r/min. After standing for 2 hours, the supernatant is drawn. The washing and drawing procedure is repeated three times, in which the amount of water used for each washing does not exceed 800 ml.

The method for recovering copper indium gallium selenide material according to the present invention further comprises in step F that an 8 mol/L sodium hydroxide solution is added to the gallium hydroxide and indium hydroxide precipitates. The mixture is heated to 80 °C while stirring at a stirring rate of 200 r/min and at a constant temperature for 20 minutes. After standing for 2 hours, the supernatant is drawn. The washing and drawing procedure is repeated three times, in which the amount of water used for each washing does not exceed 800 ml.

The method for recovering copper indium gallium selenide material according to the present invention further comprises in step G that a 1 mol/L sulfuric acid solution is added to the sodium gallate solution to adjust the pH to neutrality, followed by adding 20 ml diluted 10% polyacrylamide, maintaining the temperature at 80 °C, and stirring at a stirring rate of 200 r/min and at a constant temperature for 10 min to allow flocculation and precipitation. After precipitation, the supernatant is drawn. The supernatant is drawn after repeating the washing and settling procedure three times, in which the amount of water used for each washing does not exceed 800 mL, and gallium hydroxide precipitate is finally obtained by direct filtration. Gallium hydroxide is placed in a drying oven and dried at a constant temperature of 80 °C for more than 8 hours to give gallium hydroxide.

The method for recovering copper indium gallium selenide material according to the present invention further comprises in step H that the indium hydroxide precipitate is reversely dissolved by 600 ml of 10% hydrochloric acid, followed by adjusting the pH to 1.5, heating to 55 °C and stirring at a constant temperature and at a stirring rate of 200 r/min.

In the method for recovering copper indium gallium selenide material according to the present invention, the sample prepared by ball milling is leached by a diluted concentrated sulfuric acid in combination with an appropriate amount of hydrogen peroxide. The leaching rate is very high, which can reach 95% or above. Sulfur dioxide gas is introduced or sodium sulfite is added to reduce selenium. An appropriate amount of sodium hydroxide is added to the solution after selenium removal to adjust the pH value to 4.5 - 4.7. The mixture is washed and filtered, and the obtained copper sulfate supernatant can be directly evaporated and crystallized to give copper sulfate. The pH of the obtained indium hydroxide and gallium hydroxide precipitates can be directly adjusted to be over 13, and then the mixture is allowed to stand and separated. The supernatant is a sodium gallate solution, which can be directly hydrolyzed and filtered to give gallium hydroxide. The indium hydroxide precipitate is directly dissolved by hydrochloric acid and then replaced with a zinc plate to give sponge indium. With the method according to the present invention, the selenium recovery rate is 96%, the copper recovery rate is 92%, and the indium and gallium recovery rates are over 92%. Indium can be separated from gallium with low costs and simple operations by directly adjusting the pH value by making use of the zwitterionic nature of gallium.

### Brief Description of Drawings

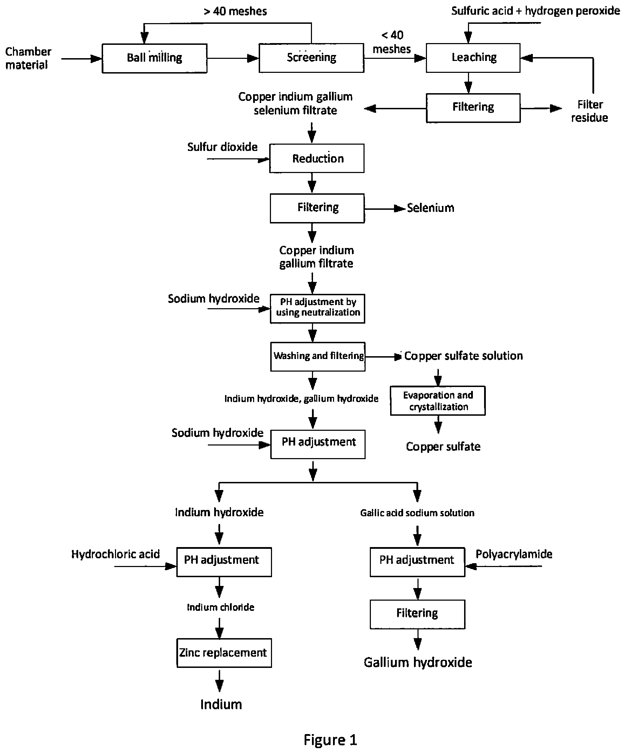

Figure 1 is a schematic flowchart of the method for recovering copper indium gallium selenide material according to an example of the present invention.

### Specific Embodiments

The embodiments of the present invention are further illustrated below with reference to the accompanying drawings.

As shown in Figure 1, the method for recovering copper indium gallium selenide material according to an example of the present invention mainly includes the following steps.

In step A, 200 g of copper indium gallium selenide material was placed in a ball mill, ball milled to powders of below 40 mesh and dried at 100 °C for 4 hours.

In step B, concentrated sulfuric acid was diluted to 25%. 200 g of dried material was mixed with 25% concentrated sulfuric acid at a solid-liquid ratio of 1:5 and heated to 90 °C, followed by introducing hydrogen peroxide at a rate of 8 ml/min at a stirring rate of 600 r/min and leaching at a constant temperature for 3 h. After the leaching was completed, the residues were filtered out to give a copper indium gallium selenium leachate.

In step C, the leachate was heated to 65 °C, followed by introducing sulfur dioxide gas at a rate of 10 L/min and maintaining the temperature for 10 hours. During the reduction of selenium, it was observed that a brick red precipitate was formed in the container which gradually turned black, and black selenium was obtained after filtration.

In step D, an 8 mol/L sodium hydroxide solution was directly added to the solution after selenium removal to adjust the pH to 4.5 ^{∼} 4.7. The mixture was stirred at ambient temperature for 20 minutes at a stirring rate of 200 r/min. After standing for 2 hours, the supernatant was drawn. The washing and drawing procedure was repeated three times, in which the amount of water used for each washing did not exceed 800 ml. Finally, gallium hydroxide and indium hydroxide precipitates and a copper sulfate supernatant were obtained by direct filtration.

In step E, the copper sulfate supernatant was directly evaporated and crystallized to give copper sulphate pentahydrate.

In step F, an 8 mol/L sodium hydroxide solution was added to the gallium hydroxide and indium hydroxide precipitates. The mixture was heated to 80 °C while stirring at a stirring rate of 200 r/min and at a constant temperature for 20 minutes. After standing for 2 hours, the supernatant was drawn. The washing and drawing procedure was repeated three times, in which the amount of water used for each washing did not exceed 800 ml. Finally, indium hydroxide precipitate and a sodium gallate solution were obtained by direct filtration.

In step G, a 1 mol/L sulfuric acid solution was added to the sodium gallate solution to adjust the pH to neutrality, followed by adding 20 ml diluted 10% polyacrylamide, maintaining the temperature at 80 °C, and stirring at a stirring rate of 200 r/min and at a constant temperature for 10 min to allow flocculation and precipitation. After precipitation, the supernatant is drawn. Similar to the procedure in step F, the supernatant was drawn after repeating the washing and settling procedure three times, in which the amount of water used for each washing does not exceed 800 mL. Finally, a gallium hydroxide precipitate was obtained by direct filtration. Gallium hydroxide was placed in a drying oven and dried at a constant temperature of 80 °C for more than 8 hours to give gallium hydroxide.

In step H, the indium hydroxide precipitate was reversely dissolved by 600 ml of 10% hydrochloric acid, followed by adjusting the pH to 1.5, heating to 55 °C and stirring at a constant temperature and at a stirring rate of 200 r/min. The mixture was replaced with a 4N zinc plate for 6 hours, followed by washing and filtering to give sponge indium.

The above embodiments are only used to specifically illustrate the present invention. They do not impose any limit to the scope of protection of the present invention, which is determined by the claims. Many variants can be deduced or conceived according to well-known technologies in the art and the technical solution disclosed herein. All these variants should also be considered within the protection scope of the present invention.

## Claims

1. A method for recovering copper indium gallium selenide material, comprising the following steps:
step A, in which the copper indium gallium selenide material is placed in a ball mill for ball milling;
step B, in which the ball milled alloy powders obtained in step A are mixed with a diluted concentrated sulfuric acid and heated up, followed by introducing hydrogen peroxide for leaching; after the leaching is completed, the residue is filtered out to give a leachate;
step C, in which the leachate is heated up, followed by introducing sulfur dioxide gas to reduce selenium;
step D, in which a sodium hydroxide solution is directly added to the solution after selenium removal; the mixture is stirred at ambient temperature and then allowed to stand, followed by drawing the supernatant; gallium hydroxide and indium hydroxide precipitates and a copper sulfate supernatant are obtained by filtration;
step E, in which the copper sulfate supernatant is directly evaporated and crystallized to give copper sulphate pentahydrate;
step F, in which a sodium hydroxide solution is added to the gallium hydroxide and indium hydroxide precipitates; the mixture is heated while stirring at a constant temperature and then allowed to stand, followed by drawing the supernatant; indium hydroxide precipitate and a sodium gallate solution are obtained by direct filtration;
step G, in which the sodium gallate solution is directly hydrolyzed to give gallium hydroxide precipitate; and
step H, in which the indium hydroxide precipitate is reversely dissolved by hydrochloric acid, followed by heating up and stirring at a constant temperature; the mixture is replaced with a 4N zinc plate to give sponge indium.

2. The method for recovering copper indium gallium selenide material according to claim 1, further comprising in step A that the copper indium gallium selenide material is ball milled to powders of below 40 mesh, followed by drying at 100 °C for 4 hours.

3. The method for recovering copper indium gallium selenide material according to claim 1, further comprising in step B that concentrated sulfuric acid is diluted to 25%; 200 g of dried material is mixed with 25% concentrated sulfuric acid at a solid-liquid ratio of 1:5 and heated to 90 °C, followed by introducing hydrogen peroxide at a rate of 8 ml/min at a stirring rate of 600 r/min and leaching at a constant temperature for 3 h.

4. The method for recovering copper indium gallium selenide material according to claim 1, further comprising in step C that the leachate is heated to 65 °C, followed by introducing sulfur dioxide gas at a rate of 10 L/min and maintaining the temperature for 10 hours to reduce selenium.

5. The method for recovering copper indium gallium selenide material according to claim 1, further comprising in step D that an 8 mol/L sodium hydroxide solution is directly added to the solution after selenium removal to adjust the pH to 4.5; the mixture is stirred at ambient temperature for 20 minutes at a stirring rate of 200 r/min; after standing for 2 hours, the supernatant is drawn; the washing and drawing procedure is repeated three times, in which the amount of water used for each washing does not exceed 800 ml.

6. The method for recovering copper indium gallium selenide material according to claim 1, further comprising in step F that an 8 mol/L sodium hydroxide solution is added to the gallium hydroxide and indium hydroxide precipitates; the mixture is heated to 80 °C while stirring at a stirring rate of 200 r/min and at a constant temperature for 20 minutes; after standing for 2 hours, the supernatant is drawn; the washing and drawing procedure is repeated three times, in which the amount of water used for each washing does not exceed 800 ml.

7. The method for recovering copper indium gallium selenide material according to claim 1, further comprising in step G that a 1 mol/L sulfuric acid solution is added to the sodium gallate solution to adjust the pH to neutrality, followed by adding 20 ml diluted 10% polyacrylamide, maintaining the temperature at 80 °C, and stirring at a stirring rate of 200 r/min and at a constant temperature for 10 min to allow flocculation and precipitation; after precipitation, the supernatant is drawn; the supernatant is drawn after repeating the washing and settling procedure three times, in which the amount of water used for each washing does not exceed 800 mL, and gallium hydroxide precipitate is finally obtained by direct filtration.

8. The method for recovering copper indium gallium selenide material according to claim 1 or 7, further comprising in step G that gallium hydroxide is placed in a drying oven and dried at a constant temperature of 80 °C for more than 8 hours to give gallium hydroxide.

9. The method for recovering copper indium gallium selenide material according to claim 1, further comprising in step H that the indium hydroxide precipitate is reversely dissolved by 600 ml of 10% hydrochloric acid, followed by adjusting the pH to 1.5, heating to 55 °C and stirring at a constant temperature and at a stirring rate of 200 r/min.
